# EUROPÄISCHE PATENTSCHRIFT

(11) **EP 3 668 759 B1**
(45) Veröffentlichungstag und Bekanntmachung des Hinweises auf die Patenterteilung: **06.01.2021**
(21) Anmeldenummer: 18758564.1
(22) Anmeldetag: 13.08.2018
(51) Int. Cl.: B60R 19/48

(54) **STOSSFÄNGER**
BUMPER
PARE CHOCS

(30) Priorität: 14.08.2017 DE 102017118511
(43) Veröffentlichungstag der Anmeldung: 24.06.2020
(73) Patentinhaber: Kirchhoff Automotive Deutschland GmbH, 57439 Attendorn (DE)
(72) Erfinder: TÖLLER, Marco, 51107 Köln (DE); GÜNTHER, Alexander, 57462 Olpe (DE); SCHMITT, Maria, 57439 Attendorn (DE)
(74) Vertreter: Haverkamp, Jens
(86) Internationale Anmeldenummer: PCT/EP2018/071919
(87) Internationale Veröffentlichungsnummer: WO 2019/034605

(56) Entgegenhaltungen:
- DE-A1- 10 150 624
- DE-A1-102007 045 001
- DE-A1-102010 007 206
- DE-A1-102013 006 365
- DE-A1-102014 009 941
- JP-A- 2000 085 497
- KR-B1- 101 252 221
- KR-B1- 101 651 566

## Beschreibung

Die Erfindung betrifft einen Stoßfänger mit einem Stoßfängerquerträger, der eine äußere Schale und wenigstens eine darin angeordnete Sensoraufnahme aufweist, sowie mit einer äußeren Verkleidungsschale, wobei die äußere Verkleidungsschale an ihrer zu dem Stoßfängerquerträger weisenden Seite im Bereich einer Sensoraufnahme wenigstens einen in die Sensoraufnahme der äußeren Schale eingreifenden Sensor trägt.

Bei Kraftfahrzeugen sind front- und heckseitig Stoßfänger angeordnet. Diese dienen dem Zweck, Stöße bis zu einer gewissen Stärke zu absorbieren, ohne dass die übrige Fahrzeugkarosserie Schaden nimmt. Moderne Stoßfänger umfassen einen Stoßfängerquerträger, der über energieabsorbierende Crashelemente, sogenannte Crashboxen, karosserieseitig typischerweise an den Längsträgern abgestützt ist. Verblendet ist der Stoßfängerquerträger zum vorder- bzw. rückseitigen Abschluss des Fahrzeuges hin mit einer Außenhaut, typischerweise aus einem Kunststoffmaterial hergestellten Verkleidungsschale. Der Stoßfängerquerträger dient zum Verteilen der Aufprallenergie über die Breite des Fahrzeuges und damit zum Einleiten der Aufprallenergie in die voneinander beabstandeten Crashelemente.

Allgemein sind in einer Verkleidungsschale eines Stoßfängers Sensoren untergebracht. Insbesondere sind typischer Bestandteil einer solchen Verkleidungsschale Nahbereichsabstandsmesssensoren zur Verwendung im Zusammenhang mit einem Einparkassistenzsystem. Derartige Nahbereichsabstandsmesssensoren werden auch als Parksensoren angesprochen. Diese Parksensoren sind an der äußeren Verkleidungsschale gehalten und greifen mit ihrem Sensorkopf in eine entsprechende Aussparung der äußeren Verkleidungsschale ein. Typischerweise befindet sich zwischen der Verblendungsschale und dem Stoßfängerquerträger ein gewisser Abstand. Um bei einer Bestückung des Stoßfängers mit Sensoren, beispielsweise Parksensoren, den Abstand zwischen der äußeren Verkleidungsschale und dem Stoßfängerquerträger nicht vergrößern zu müssen, sind in den Stoßfängerquerträger Durchzüge als Sensoraufnahmen eingebracht. In diese tauchen die von der Verkleidungsschale getragenen Sensoren ein. Ein solcher Durchzug wird auch benötigt, um genügend Raum bereitzustellen, um ein elektrisches Anschlusskabel an dem dem Sensorkopf gegenüberliegenden rückseitigen Abschluss des Sensors befindlichen Steckverbinder heranführen zu können.

Um die notwendige Steifigkeit bei gleichzeitig kostengünstiger Herstellung eines solchen Stoßfängerquerträgers zu erreichen, ist dieser typischerweise zweischalig aufgebaut, und zwar mit einer äußeren Schale und mit einer inneren Schale, die in Fahrtrichtung des Fahrzeuges hintereinander angeordnet sind. Auf diese Weise ist durch den Stoßfängerquerträger ein sich quer zur Fahrtrichtung erstreckendes Hohlkammerprofil gebildet. Die Durchzüge zum Bereitstellen einer Sensoraufnahme sind in die äußere Schale eingebracht. Durch das Einbringen der Durchzüge zum Bereitstellen der notwendigen Sensoraufnahmen ist die äußere Schale und damit der Stoßfängerquerträger insgesamt an den Stellen der Durchzüge geschwächt, was zu einem unerwünschten Einknicken des Stoßfängerquerträgers bei einem zu absorbierenden Stoß führen kann. Kompensiert wird dieses durch Verwenden einer äußeren Schale mit einer entsprechend größeren Materialstärke. Hierdurch ist jedoch das Gewicht des Stoßfängerquerträgers erhöht. Die vorstehend skizzierte Problematik stellt sich vor allem dann ein, wenn ein solcher Stoßfänger mehr als nur ein oder zwei Sensoren tragen soll und/oder einschalig, insbesondere hutförmig, ausgebildet und in Fahrzeugrichtung geöffnet angeordnet ist.

Neben den vorstehend beschriebenen Stoßfängern sind auch solche bekannt, bei denen der oder die Sensoren an dem Stoßfängerquerträger angeordnet und gehalten sind. Problematisch ist bei einer solchen Ausgestaltung, dass die Sensoren mit ihrem Sensorkopf von der äußeren Verkleidungsschale beabstandet und durch diese verkleidet sind. Entsprechend ungenauer sind die Sensordaten, beispielsweise wenn es sich bei den Sensoren um Ultraschallsensoren im Rahmen eines Parkassistentsystems handelt. Derartige Stoßfängerausgestaltungen sind beispielsweise aus DE 10 2014 009 941 A1 oder DE 10 2013 006 365 A1 bekannt.

KR 101 252 221 B1 offenbart einen Stoßfänger mit den Merkmalen des Oberbegriffs des Anspruchs 1.

Ausgehend von diesem diskutierten Stand der Technik liegt der Erfindung daher die Aufgabe zugrunde, einen Stoßfänger der eingangs genannten Art dergestalt weiterzubilden, dass unabhängig von der Anzahl der Sensoren, die der damit ausgerüstete Stoßfänger tragen soll, eine mit der Anzahl der Sensoren steigende Gewichtszunahme vermieden ist und eine einfache und effektive Montage der Sensoren im Stoßfänger möglich ist.

Gelöst wird diese Aufgabe erfindungsgemäß durch einen eingangs genannten, gattungsgemäßen Stoßfänger, bei dem die wenigstens eine Sensoraufnahme als von dem vorderseitigen Abschluss der äußeren Schale ausgehende, eingeprägte Tasche mit einer oberen Wand, einer unteren Wand und einem die beiden Wände verbindenden Boden ausgeführt ist.

Bei diesem Stoßfänger sind die Sensoraufnahmen des Stoßfängerquerträgers im Unterschied zum Stand der Technik nicht als Durchzüge, sondern als in Richtung zum Fahrzeug und damit in x-Richtung der Fahrzeugerstreckung eingeprägte Taschen ausgeführt. Diese Taschen verfügen über eine obere Wand, eine untere Wand und einen die beiden Wände verbindenden Boden. Die beiden Böden sind in z-Richtung voneinander beabstandet. Durch eine solche Ausprägung in der äußeren Schale des Stoßfängerquerträgers wird diese und damit der gesamte Stoßfängerquerträger im Unterschied zu solchen aus dem Stand der Technik nicht geschwächt, sondern das Gegenteil ist der Fall: Die äußere Schale wird durch diese Maßnahme versteift. Daher kann ein Stoßfänger mit einem solchen Stoßfängerquerträger auch mehrere Sensoraufnahmen aufweisen, ohne dass zur Gewährleistung der gewünschten Steifigkeit die äußere Schale des Stoßfängerquerträgers mit einer größeren Materialstärke ausgeführt werden müsste. Aufgrund der durch die eingeprägten Sensoraufnahmen in den Stoßfängerquerträger eingebrachten Strukturen ist seine Steifigkeit nicht nur gegenüber einem Einknicken, sondern auch gegenüber Verwindungsbelastungen, erhöht. Der Stoßfängerquerträger gemäß diesem Konzept kann bezüglich seiner äußeren Schale aus diesem Grunde mitunter sogar mit einer geringeren Materialstärke ausgelegt sein. Die Einprägungen wirken nach Art von versteifenden Sicken. Aufgrund der versteifenden Wirkung der taschenartigen Sensoraufnahmen kann durch die zumindest eine diesbezügliche versteifende Verprägung zum Erzielen derselben Steifigkeit des Stoßfängerquerträgers mitunter auf den Einsatz einer zweiten Schale sogar verzichtet werden.

Gleichwohl ist es möglich, einen Stoßfängerquerträger eines solchen Stoßfängers auch zweischalig mit einer äußeren Schale und einer inneren Schale auszuführen.

Die beiden Schalen sind zur Ausbildung eines Hohlkammerprofils miteinander verbunden, beispielsweise durch Verschweißen von aneinander anliegenden Verbindungsflanschen.

Vorzugsweise sind die Sensoraufnahmen des Stoßfängerquerträgers ausgeführt, damit diese neben der oberen Wand, der unteren Wand und einem die beiden Wände verbindenden Boden ebenfalls über eine rechte und linke seitliche Wand verfügen. Diese können ebenso wie die untere und obere Wand zueinander geneigt sein, wobei sich die Querschnittsfläche zum Boden der Sensoraufnahme hin verjüngt.

Die zumindest eine Sensoraufnahme kann in einer sich in Längserstreckung der äußeren Schale in diese in Richtung zur inneren Schale eingearbeiteten Sicke angeordnet sein. Weist diese Sicke eine für die Sensoraufnahme ausreichende Tiefe auf, braucht die durch die Sicke bereitgestellte Sensoraufnahme nicht notwendigerweise eine rechte und linke Seitenwand aufzuweisen. Ist die Tiefe einer solchen Sicke nicht ausreichend, um als Sensoraufnahme zu dienen, wird die Tiefe derselben im Bereich der als eingeprägte Tasche ausgebildeten Sensoraufnahme entsprechend vertieft, sodass dann, ebenso wie bei einer Anordnung der Sensoraufnahme außerhalb einer solchen Sicke, die Sensoraufnahme zusätzlich eine rechte und eine linke Wand aufweist. Diese Wände sind in Richtung zum Boden der Sensoraufnahme geneigt. Bei Vorsehen einer äußeren Schale des Stoßfängerquerträgers mit einer der Längserstreckung derselben folgenden, in Richtung zur hinteren Schale eingeprägten Sicke, kann eine weitere Versteifung derselben dadurch herbeigeführt werden, dass die in Richtung der vertikalen Erstreckung des Stoßfängerquerträgers sich erstreckende Höhe der Sicke im Bereich einer Sensoraufnahme größer ist als die zu der Sensoraufnahme benachbarten Sickenabschnitte. Eine solche Verprägung in der Höhe der Sicke wirkt sich steifigkeitssteigernd aus.

Um den Abstand der äußeren Verkleidungsschale von dem Stoßfängerquerträger eines damit ausgerüsteten Stoßfängers gering zu halten, trägt die Verkleidungsschale vorzugsweise Sensoren, die mit einem in radialer Richtung angeordneten Steckverbinder oder einem unmittelbar aus dem Sensor in dieser Richtung herausgeführten elektrischen Anschlusskabel ausgerüstet sind. Die Auslegung eines Stoßfängers mit derartigen Sensoren ist auch vor dem Hintergrund zweckmäßig, dass dann nicht nur die Länge des elektrischen Anschlusskabels durch die dann nicht benötigte Anschlusskabelschlaufe reduziert werden kann, sondern dass dann auch Beschädigungen am Anschlusskabel im Bereich einer Kabelschlaufe an den Durchzugsrändern, wie dieses bei Stoßfängern gemäß dem Stand der Technik mitunter vorkommen kann, vermieden ist.

Von besonderem Vorteil des erfindungsgemäßen Stoßfängers ist, dass der zumindest eine Sensor von der äußeren Verkleidungsschale getragen ist. Dieses ist vorteilhaft, da dann der Stoßfänger mit seinem Stoßfängerquerträger und der Auslegung der zumindest einen Sensoraufnahme so dimensioniert werden kann, dass der Sensor in eine Sensoraufnahme berührungsfrei eingreift bzw. eintaucht. Eine mechanische Abstützung des Sensors am Stoßfängerquerträger ist nicht unbedingt erforderlich, wenn auch möglich. Ohne eine mechanische Abstützung ist eine Schwingungsentkopplung herbeigeführt. Auch können dann auf die äußere Verkleidungsschale einwirkende Stöße aufgenommen werden, ohne den Sensor zu beschädigen, zumindest bezüglich des möglichen Deformationsweges der Verkleidungsschale gegenüber der äußeren Schale des Stoßfängerquerträgers in dem Maße, mit dem der Sensor von dem Boden bzw. den Wänden der Sensoraufnahme beabstandet ist. Gleiches gilt für nicht-horizontal auf die äußere Verkleidungsschale einwirkende Stöße, bei denen die Verkleidungsschale nachgiebig reagiert. In Folge der bei diesem Ausführungsbeispiel vorgesehene Beanstandung der äußeren Mantelfläche des Sensors von der oberen Wand und der unteren Wand und ggf., falls vorhanden, der Seitenwände kann der Sensor auch diesbezügliche Bewegungen mit der Verkleidungsschale beschädigungsfrei mitmachen. Die Beabstandung des von dem Sensorkopf gegenüberliegenden Abschluss des Sensors von dem Boden der Sensoraufnahme beträgt typischerweise einige Millimeter bis ca. 15 Millimeter. Je nach dem zur Verfügung stehenden Bauraum kann dieser Abstand auch größer bemessen sein. Wenn der Stoßfänger in x-Richtung des Fahrzeuges eine möglichst geringe Länge aufweisen soll, wird man die Sensoraufnahme in Anpassung an den Sensor so auslegen, dass der Sensor in Fahrzeuglängsrichtung (x-Richtung) zu 60% - 80% mit seiner in Fahrzeuglängsrichtung weisenden Erstreckung in die Sensoraufnahme eingreift.

Bei den im Rahmen dieser Ausführungen benutzten Richtungsangaben - x-Richtung, y-Richtung und z-Richtung handelt es sich um die üblichen, in einem Fahrzeug verwendeten Richtungsangaben, wobei die x-Richtung, die Richtung des Fahrzeuges in seiner Längserstreckung, die y-Richtung, die Querrichtung zur Längserstreckung und die z-Richtung, die Höhe des Fahrzeuges sind.

Nachfolgend ist die Erfindung anhand eines Ausführungsbeispiels unter Bezugnahme auf die beiliegenden Figuren beschrieben. Es zeigen:
- **Fig. 1:**: eine perspektivische Ansicht eines Stoßfängerquerträgers als Teil eines Stoßfängers für ein Kraftfahrzeug und
- **Fig. 2:**: einen schematisierten Querschnitt durch den Stoßfängerquerträger entlang der Linie A-B der Figur 1.

Ein Stoßfängerquerträger 1 ist aus zwei, aus jeweils einer Blechplatine umgeformten Schalen 2, 3 zusammengesetzt. Die Schale 2 ist die äußere und somit von der Karosserie eines Fahrzeuges wegweisende Schale, während die Schale 3 die innere, zum Fahrzeug weisende Schale ist. Der Stoßfängerquerträger 1 wird unter Zwischenschaltung von Crashelementen an die Längsträger eines Fahrzeuges angeschlossen. Zu diesem Zweck verfügt der Stoßfängerquerträger 1 bzw. seine innere Schale 3 über Anbindungsabschnitte 4, 4.1, an denen jeweils ein Crashelement zum Anschließen des Stoßfängerquerträgers 1 an eine Fahrzeugkarosserie angeschlossen werden. Die in den Anbindungsabschnitten 4, 4.1 eingebrachten Öffnungen dienen einer Anbringung von Abschlepphaken, wenn erforderlich.

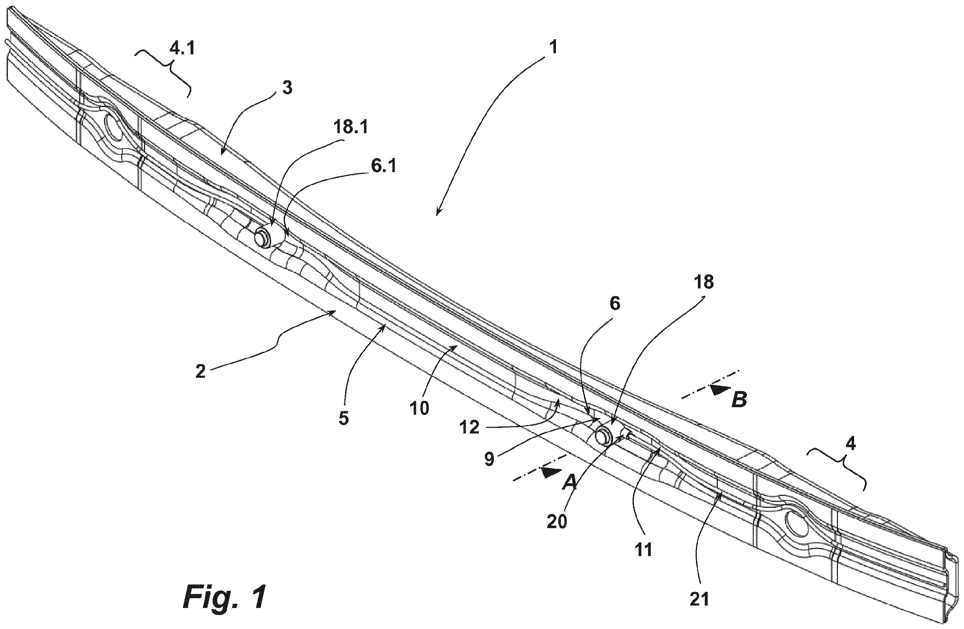

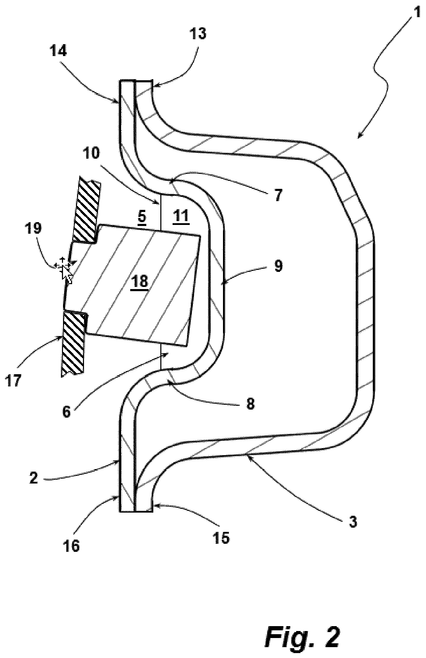

Die erste, äußere Schale 2 des Stoßfängerquerträgers 1 ist mit einer der Längserstreckung des Stoßfängerquerträgers 1 folgenden Versteifungssicke 5 ausgeführt. Die Versteifungssicke 5 ist in Richtung zu der zweiten, inneren Schale 3 in die äußere Schale 2 eingearbeitet. Der Stoßfängerquerträger 1 ist Teil eines Stoßfängers, dessen äußere, in Figur 1 nicht gezeigte Verkleidungsschale zwei Sensoren 18, 18.1, beispielsweise Parksensoren, trägt. Zu diesem Zweck sind in die äußere Schale 2 zwei Sensoraufnahmen 6, 6.1 als Taschen eingeprägt. Die Sensoraufnahmen 6, 6.1 befinden sich innerhalb der Längserstreckung der Versteifungssicke 5. Die taschenartigen Sensoraufnahmen 6, 6.1 sind durch eine über die Einprägung zum Ausbilden der Versteifungssicke 5 hinausgehende Verprägungshöhe und Verprägungstiefe erstellt. Damit sind bei dem dargestellten Ausführungsbeispiel die Sensoraufnahmen 6, 6.1 als die Versteifungssicke 5 zusätzlich versteifende Sicken ausgeführt. Jede Sensoraufnahme 6, 6.1 ist, wie in der Schnittdarstellung der Figur 2 besser zu erkennen, durch eine obere Wand 7, eine untere Wand 8 und eine diese beiden Wände 7, 8 verbindenden Boden 9 bereitgestellt. Der Boden 9 bildet die Fortsetzung des Bodens 10 der Versteifungssicke 5. Ein rechter Wandabschnitt 11 und ein linker Wandabschnitt 12, in der Figur nur zu der Sensoraufnahme 6 mit diesen Bezugszeichen kenntlich gemacht, verbindet den Boden 10 der Versteifungssicke 5 mit dem Boden 9 der Sensoraufnahme 6, 6.1. Der rechte und der linke Wandabschnitt 11, 12 weisen eine Länge bei dem dargestellten Ausführungsbeispiel auf, die etwa der Länge des Bodens 9 jeder Sensoraufnahme 6, 6.1 entspricht.

In einer in den Figuren nicht dargestellten Ausgestaltung weisen die Sensoraufnahmen eine unterschiedliche Größe auf. Auch kann in eine solche, zumindest teilweise der Längserstreckung des Stoßfängerquerträgers folgende Versteifungssicke ein dessen Höhe und Tiefe vergrößernder Durchzug, etwa für die Aufnahme einer Abschleppvorrichtung eingebracht sein. Derartige Änderung in der Höhe und ggf. der Tiefe der Versteifungssicke tragen zur Verstärkung des Stoßfängerquerträgers bei. Bei dem beschriebenen Konzept einer Ausgestaltung des Stoßfängerquerträgers wird die der Längserstreckung des Stoßfängerquerträgers folgende Sicke genutzt, um durch entsprechendes Verprägen derselben den Stoßfängerquerträger zusätzliche Funktionalitäten zukommen zu lassen.

Aus der Querschnittsdarstellung der Figur 2 ist erkennbar, dass die beiden Schalen 2, 3 jeweils nach Art eines Hutprofils ausgeführt sind und jeweils einen oberseitigen Verbindungsflansch 13, 14 sowie einen unteren Verbindungsflansch 15, 16 aufweisen. Diese liegen in einem Abschnitt flächig aneinander. Zur Verbindung der beiden Schalen 2, 3 sind diese mit ihren oberen Verbindungsflanschen 13, 14 und ihren Verbindungsflanschen 15, 16 miteinander umlaufend durch eine Schweißverbindung gefügt.

Die Sensoraufnahmen 6, 6.1 stellen genügend Raum zur Verfügung, damit in diese jeweils ein von einer äußeren Verkleidungsschale 17 (siehe Figur 2) getragener Sensor 18 eintauchen kann. Der Sensor 18 selbst stützt sich in der Sensoraufnahme 6, 6.1 bei dem dargestellten Ausführungsbeispiel nicht ab, befinden sich somit mit Abstand von dem Boden 9 sowie der oberen Wand 7 und der unteren Wand 8. Getragen sind die Sensoren 18, 18.1 vom der äußeren Verkleidungsschale 17, wie in der Schnittdarstellung der Figur 2 schematisiert gezeigt. Der Sensorkopf 19 des Sensors 18 greift zu diesem Zweck in eine entsprechende Öffnung der Verkleidungsschale 17 ein. Seine Vorderseite ist somit nicht durch die Verkleidungsschale 17 bedeckt. Die Befestigung des Sensors 18 an der äußeren Verkleidungsschale 17 ist in Figur 2 nur schematisiert gezeigt. Dieser kann beispielsweise in die in die äußere Verkleidungsschale 17 eingebrachte Durchbrechung, durch die der Sensorkopf 19 hindurchgreift, mit der Verkleidungsschale 17 verklebt sein. Die Sensoren 18, 18.1 weisen einen in radialer Richtung am Gehäuse angeordneten Steckverbinderanschluss auf, sodass diese aus dieser Richtung mit einem Steckverbinder 20 an dem Anschlussende eines Anschlusskabels 21 kontaktiert werden können. Das an dem Steckverbinder 20 befindliche Anschlusskabel 21 ist in der Versteifungssicke 5 bis zum seitlichen Abschluss des Stoßfängerquerträgers 1 geführt, um dann einem entsprechenden Steuergerät zugeführt zu werden.

Der beschriebene Stoßfängerquerträger kann fahrzeugseitig sowohl frontals auch heckseitig montiert sein.

Die Erfindung ist unter Bezugnahme auf die Figuren anhand eines Ausführungsbeispiels beschrieben worden. Ohne den Umfang der geltenden Ansprüche zu verlassen, ergeben sich für einen Fachmann zahlreiche weitere Möglichkeiten die Erfindung umzusetzen, ohne dass dieses im Rahmen dieser Ausführungen ausgeführt werden müsste.

### Bezugszeichenliste

- 1: Stoßfängerquerträger
- 2: Schale
- 3: Schale
- 4,4.1: Anbindungsabschnitt
- 5: Versteifungssicke
- 6,6.1: Sensoraufnahme
- 7: obere Wand
- 8: untere Wand
- 9: Boden
- 10: Boden
- 11: rechter Wandabschnitt
- 12: linker Wandabschnitt
- 13: oberer Verbindungsflansch
- 14: oberer Verbindungsflansch
- 15: unterer Verbindungsflansch
- 16: unterer Verbindungsflansch
- 17: Verkleidungsschale
- 18, 18.1: Sensor
- 19: Sensorkopf
- 20: Steckverbinder
- 21: Anschlusskabel

## Patentansprüche

1. Stoßfänger mit einem Stoßfängerquerträger, der eine äußere aus einer Blechplatine umgeformte Schale (2) und wenigstens eine darin angeordnete Sensoraufnahme (6, 6.1) aufweist, sowie mit einer äußeren Verkleidungsschale (17), wobei die äußere Verkleidungsschale (17) an ihrer zu dem Stoßfängerquerträger (1) weisenden Seite im Bereich einer Sensoraufnahme (6, 6.1) wenigstens einen in die Sensoraufnahme (6, 6.1) der äußeren Schale (2) eingreifenden Sensor (18, 18.1) trägt, **dadurch gekennzeichnet, dass** die wenigstens eine Sensoraufnahme (6, 6.1) als von dem vorderseitigen Abschluss der äußeren Schale (2) ausgehende, eingeprägte Tasche mit einer oberen Wand (7), einer unteren Wand (8) und einem die beiden Wände (7, 8) verbindenden Boden (9) ausgeführt ist.

2. Stoßfänger nach Anspruch 1, **dadurch gekennzeichnet, dass** der in eine Sensoraufnahme (6, 6.1) eingreifende Sensor (18, 18.1) berührungsfrei in eine solche Sensoraufnahme (6, 6.1) eingreift.

3. Stoßfänger nach Anspruch 1 oder 2, **dadurch gekennzeichnet, dass** die Tiefe der wenigstens einen taschenartigen Sensoraufnahme (6, 6.1) ausgelegt ist, damit der darin aufzunehmende Sensor (18, 18.1) in diese zumindest mit 40 % seiner in Fahrzeuglängsrichtung weisenden Erstreckung eintaucht.

4. Stoßfänger nach Anspruch 3, **dadurch gekennzeichnet, dass** der in eine Sensoraufnahme (6, 6.1) eingreifende Sensor (18, 18.1) in diese mit 60% - 80% seiner in Fahrzeuglängsrichtung weisender Erstreckung eingreift.

5. Stoßfänger nach einem der Ansprüche 1 bis 4, **dadurch gekennzeichnet, dass** die äußere Schale (2) eine erste Schale ist und der Stoßfängerquerträger (1) eine zweite, innere aus einer Blechplatine umgeformte Schale (3) aufweist, welche beiden Schalen (2, 3) zur Ausbildung eines Hohlkammerprofils miteinander verbunden sind.

6. Stoßfänger nach Anspruch 5, **dadurch gekennzeichnet, dass** die beiden Schalen (2, 3) jeweils einen oberseitigen und einen unterseitigen Verbindungsflansch (13, 14; 15, 16) aufweisen, die zum Fügen der beiden Schalen (2, 3) miteinander an ihren Verbindungsflanschen (13, 14; 15, 16) in eine flächige Anlage miteinander gestellt sind.

7. Stoßfänger nach einem der Ansprüche 1 bis 6, **dadurch gekennzeichnet, dass** die taschenartige Sensoraufnahme (6, 6.1) in eine sich in Richtung der Längserstreckung der ersten Schale (2) erstreckende, in Richtung zum Fahrzeug bzw. zur zweiten Schale (3) ausgeformten Sicke (5) eingearbeitet ist.

8. Stoßfänger nach Anspruch 7, **dadurch gekennzeichnet, dass** die Sensoraufnahme (6, 6.1) eine größere Höhe aufweist als die Sicke (5).

9. Stoßfänger nach Anspruch 7 oder 8, **dadurch gekennzeichnet, dass** die Sensoraufnahme (6, 6.1) eine größere Tiefe aufweist als die Sicke (5).

10. Stoßfänger nach einem der Ansprüche 1 bis 9, **dadurch gekennzeichnet, dass** der Stoßfängerquerträger (1) mehrere, mit Abstand zueinander angeordnete, als Taschen ausgeführte Sensoraufnahmen (6, 6.1) aufweist.

11. Stoßfängerquerträger nach einem der Ansprüche 1 bis 10, **dadurch gekennzeichnet, dass** die äußere Verkleidungsschale (17) als Sensor (18, 18.1) einen Nahbereichsabstandsmesssensor trägt.

12. Stoßfänger nach einem der Ansprüche 1 bis 11, **dadurch gekennzeichnet, dass** der zumindest eine Sensor (18, 18.1) einen in radialer Richtung bezüglich seines Gehäuses angeordneten Steckverbinderanschluss zum Anschließen eines Anschlusskabels (21) aufweist.

## Claims

1. Bumper with a bumper crossmember, having an outer shell (2), formed from a sheet metal plate, and at least one sensor holder (6, 6.1) arranged therein, and with an outer cladding shell (17), wherein the outer cladding shell (17) carries on its side facing towards the bumper crossmember (1), in the region of a sensor holder (6, 6.1), at least one sensor (18, 18.1) engaging into the sensor holder (6, 6.1) of the outer shell (2), **characterised in that** the at least one sensor holder (6, 6.1) is implemented as an impressed pocket originating from the front-side termination of the outer shell (2), with an upper wall (7), a lower wall (8), and a base (9) connecting the two walls (7,8).

2. Bumper according to claim 1, **characterised in that** the sensor (18, 18.1) engaging into a sensor holder (6, 6.1) engages into such a sensor holder (6, 6.1) free of contact.

3. Bumper according to claim 1 or 2, **characterised in that** the depth of the at least one sensor holder (6, 6.1) in the form of a pocket is designed in such a way that the sensor (18, 18.1) which is to be accommodated in it is immersed into by at least 40% of its extension pointing in the longitudinal direction of the vehicle.

4. Bumper according to claim 3, **characterised in that** the sensor (18, 18.1) engaging into a sensor holder (6, 6.1) engages into this by 60% - 80% of its extension pointing in the longitudinal direction of the vehicle.

5. Bumper according to any one of claims 1 to 4, **characterised in that** the outer shell (2) is a first shell and the bumper crossmember (1) comprises a second inner shell (3) which is formed from a sheet metal plate, these two shells (2, 3) being connected to one another so as to form a hollow chamber profile.

6. Bumper according to claim 5, **characterised in that** the two shells (2, 3) each comprise an upper side and a lower side connection flange (13, 14; 15, 16), which, in order to join the two shells (2, 3) to one another, are placed in flat contact with one another at their connection flanges (13, 14; 15, 16).

7. Bumper according to any one of claims 1 to 6, **characterised in that** the pocket-type sensor holder (6, 6.1) is impressed into a beading (5) extending in the direction of the longitudinal extension of the first shell (2) in the direction towards the vehicle or towards the second shell (3).

8. Bumper according to claim 7, **characterised in that** the sensor holder (6, 6.1) exhibits a greater height than the beading (5).

9. Bumper according to claim 7 or 8, **characterised in that** the sensor holder (6, 6.1) exhibits a greater depth than the beading (5).

10. Bumper according to any one of claims 1 to 9, **characterised in that** the bumper crossmember (1) comprises a plurality of sensor holders (6, 6.1) arranged spaced apart from one another and configured as pockets.

11. Bumper according to any one of claims 1 to 10, **characterised in that** the outer cladding shell (17) carries a proximity sensor as the sensor (18, 18.1).

12. Bumper according to any one of claims 1 to 11, **characterised in that** the at least one sensor (18, 18.1) comprises a plug connection element, arranged in the radial direction in relation to its housing, for connecting a connection cable (21).

## Revendications

1. Pare-chocs avec une traverse de pare-chocs, qui présente une coque (2) extérieure mise en forme à partir d'une platine pour tôle, et dans laquelle est disposé au moins un logement de capteur (6, 6.1), ainsi qu'une coque d'habillage (17) extérieure, la coque d'habillage (17) extérieure supportant sur son côté orienté vers la traverse de pare-chocs (1), dans la zone d'un logement de capteur (6, 6.1), au moins un capteur (18, 18.1) s'engageant dans le logement de capteur (6, 6.1) de la coque (2) extérieure, **caractérisé en ce que** l'au moins un logement de capteur (6, 6.1) est conformé à la manière d'une poche en relief partant de la terminaison en face avant de la coque extérieure (2) comportant une paroi supérieure (7), une paroi inférieure (8) et un fond (9) reliant les deux parois (7, 8)

2. Pare-chocs selon la revendication 1, **caractérisé en ce que** le capteur (18, 18.1) s'engageant dans le logement de capteur (6, 6.1) s'engage sans contact dans un tel logement de capteur (6, 6.1).

3. Pare-chocs selon la revendication 1 ou 2, **caractérisé en ce que** la profondeur de l'au moins un logement de capteur (6, 6.1) à la manière d'une poche est configuré pour que le capteur (18, 18.1), destiné à y être mis en place, s'engage dans celui-ci sur au moins 40 % de son étendue orientée dans le sens longitudinal du véhicule.

4. Pare-chocs selon la revendication 3, **caractérisé en ce que** le capteur (18, 18.1) s'engageant dans un logement de capteur (6, 6.1) s'engage dans celui-ci sur 60 à 80 % de son étendue orientée dans le sens longitudinal du véhicule.

5. Pare-chocs selon l'une des revendications 1 à 4, **caractérisé en ce que** la coque (2) extérieure est une première coque et que la traverse de pare-chocs (1) présente une seconde coque (3) intérieure, mise en forme à partir d'une platine pour tôle, laquelle relie les deux coques (2, 3) afin de réaliser un profil à chambre creuse.

6. Pare-chocs selon la revendication 5, **caractérisé en ce que** les deux coques (2, 3) présentent respectivement sur le haut et sur le bas une patte de liaison (13, 14 ; 15, 16), lesquelles sont mises dans une disposition plane afin d'assembler les deux coques (2, 3) au droit de leurs pattes de liaison.

7. Pare-chocs selon l'une des revendications 1 à 6, **caractérisé en ce que** le logement de capteur (6, 6.1) à la manière d'une poche est usiné dans une gorge (5) mise en forme qui s'étend vers le sens de l'étendue longitudinale de la première coque (2), en direction du véhicule et de la seconde coque (3).

8. Pare-chocs selon la revendication 7, **caractérisé en ce que** le logement de capteur (6, 6.1) présente une hauteur plus importante que la gorge (5).

9. Pare-chocs selon la revendication 7 ou 8, **caractérisé en ce que** le logement de capteur (6, 6.1) présente une profondeur plus importante que la gorge (5).

10. Pare-chocs selon l'une des revendications 1 à 9, **caractérisé en ce que** la traverse de pare-chocs (1) présente plusieurs logements de capteurs (6, 6.1) conformés à la manière d'une poche, disposés à distance l'un de l'autre.

11. Pare-chocs selon l'une des revendications 1 à 10, **caractérisé en ce que** la coque d'habillage (17) extérieure supporte en guise de capteur (18, 18.1) un capteur de mesure de l'intervalle de recul.

12. Pare-chocs selon l'une des revendications 1 à 11, **caractérisé en ce que** l'au moins un capteur (18, 18.1) présente une connexion par enfichage disposée dans le sens radial par rapport à son boîtier, destinée à raccorder un câble de raccordement (21).
